# EUROPEAN PATENT SPECIFICATION

(11) **EP 4 047 312 B1**
(45) Date of publication and mention of the grant of the patent: **16.07.2025**
(21) Application number: 21158107.9
(22) Date of filing: 19.02.2021
(51) Int. Cl.: G01C 21/20, G06T 19/00, B63B 49/00, G06F 18/211, G06V 10/25, G06V 20/52

(54) **AUGMENTED REALITY BASED TIDAL CURRENT DISPLAY DEVICE**
AUF ERWEITERTER REALITÄT BASIERTE GEZEITENSTROMANZEIGEVORRICHTUNG
DISPOSITIF D'AFFICHAGE DE COURANT DE MARÉE BASÉ SUR LA RÉALITÉ AUGMENTÉE

(43) Date of publication of application: 24.08.2022
(73) Proprietor: FURUNO ELECTRIC CO., LTD., Nishinomiya-City, Hyogo 662-8580 (JP)
(72) Inventor: NISHIYAMA, Koji, Nishinomiya-City, Hyogo 662-8580 (JP)
(74) Representative: Müller Hoffmann & Partner

(56) References cited:
- US-A1- 2014 240 313
- US-A1- 2015 347 852
- US-A1- 2020 090 414
- WISERNIG EDUARD ET AL: "Augmented Reality Visualization for Sailboats (ARVS)", 2015 INTERNATIONAL CONFERENCE ON CYBERWORLDS (CW), IEEE, 7 October 2015 (2015-10-07), pages 61 - 68, XP032859027, DOI: 10.1109/CW.2015.74

## Description

### TECHNICAL FIELD

The present disclosure mainly relates to an augmented reality based tidal current display device, and more specifically to superimposing tidal current information on an image for navigation of a water vessel.

### BACKGROUND OF THE INVENTION

Tidal currents have been known to influence a course of the marine vessel on water. Vessel navigating personnel, for example, a captain, crew, or other navigating personnel on-board the marine vessel may be unaware of when and how each tidal current may influence the course of the marine vessel. For example, in waters where tidal currents may, or stated differently - are likely to, be encountered by the marine vessel, a position, direction and/or speed of the tidal current may be unknown by the vessel navigating personnel and consequently, the vessel navigating personnel may be forced to choose or elect a sub-optimal course of travel for the marine vessel in such waters. Depending on a severity of, or by simply encountering over a prolonged period of time, these tidal currents may contribute in negatively impacting a structural integrity and/or an operational performance of the marine vessel.
"Augmented Reality Visualization for Sailboats (ARVS)" by Wisernig et al. (2015 International Conference on Cyberworlds (CW), 20151007 IEEE, Pages : 61 - 68) provides an augmented reality system with an interface for representing a wide spectrum of marine data.
US 2020/0090414 A1 discloses an image generating device that includes processing circuitry configured to acquire positional information indicative of a position of a water-surface movable body where an imaging device is to be installed, acquire posture information indicative of a posture of the water-surface movable body, acquire additional display information including information indicative of positions of a plurality of locations, generate three-dimensional display data for displaying a graphic indicative of the additional display information by superimposedly placing the graphic on a water surface portion of an image outputted from the imaging device based on the positional information, the posture information, and the positions of the plurality of locations included in the additional display information, and output the graphic rendering the three-dimensional display data.
US 2015/0347852 A1 discloses an apparatus that is configured to at least perform; detecting user selection of a part of an image wherein the image is displayed on a display; obtaining context information; and determining information to be provided to the user based on the user selection, the displayed image and the obtained context information.
US 2014/0240313 A1 discloses a Heads-Up-Display ("HUD") system for projecting safety/mission critical data onto a display pair of light weight projection glasses or monocular creating a virtual 360 degree. The HUD system includes a see-through display surface, a workstation, application software, and inputs containing the safety/mission critical information (Current User Position, Total Collision Avoidance System-TCAS, Global Positioning System-GPS, Magnetic Resonance Imaging-MRI Images, CAT scan images, Weather data, Military troop data, real-time space type markings etc.). The workstation software processes the incoming safety/mission critical data and converts it into a three-dimensional stereographic space for the user to view. Selecting any of the images may display available information about the selected item or may enhance the image. Predicted position vectors may be displayed as well as three-dimensional terrain.

Some systems have been developed in the past to assist in the navigation of marine vessels. Usually, a geographical chart showing a chart of a predetermined area and a tidal current at each location within an area is provided from an external base through communication equipment. The information indicating the tidal current generally includes the measuring position and the direction and speed of the tidal current at the measuring position. A ship navigating in the above area can obtain information on the tidal current by using a communication means such as satellite communication. The obtained information is displayed on the navigation monitor of a vessel to help determine the vessel route. However, many of these systems have mostly relied on on-board equipment for sensing various parameters associated with the surroundings of the marine vessel. Nevertheless, it is complex, challenging, and sometimes even impossible to detect or measure aspects such as tidal currents using such on-board equipment. In fact, such on-board equipment may not be simple, yet reliable, for use in the detection or measurement of aspects of the surroundings such as tidal currents.

Conventional Augmented Reality (AR) based navigation systems can display image information captured by an image sensor (camera) and information about surrounding ships and land acquired based on information captured by a sensor such as a radar, however, it is difficult to display the tidal current information by the conventional AR navigation system because the tidal current information is not obtained by the sensor of the own vessel except around the own vessel, but obtained from an external base through communication equipment. There does not exist an AR based navigation system that is able to display tidal current information provided from other than one's own vessel on an AR display screen.

For the aforementioned reasons, there is a need for providing a system and method that takes into account tidal currents and their potential impacts on the marine vessel for assisting in the navigation of the marine vessel.

### SUMMARY OF THE INVENTION

The present invention is defined by the claimed subject-matter. Embodiments not covered by the claims do not form part of the invention.

### EFFECT(S) OF THE INVENTION

The problem of not being able to display tidal current information provided from other than one's own vessel on an AR display screen is solved by visually capturing the state of the tidal current on the sea surface by a camera, and aligning the position and direction of the tidal current with the surface azimuth and position of the sea surface of the camera image.

### BRIEF DESCRIPTION OF DRAWINGS

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein:
FIG. 1 is a block diagram illustrating an entire configuration of an Augmented Reality (AR) based tidal current display device in which an image sensor is attached to a movable body according to one embodiment of the present disclosure;
FIG. 2A illustrates a chart of a region including the movable body, and a sub-region in the chart;
FIG. 2B illustrates the superimposing of tidal current information on an image captured by the image sensor;
FIG. 3 is a side view illustrating a height of the image sensor from the water surface, a depression angle of the image sensor and a viewing angle of the image sensor;
FIG. 4 is a block diagram illustrating various components of a position calculation unit of the AR based tidal current display device of FIG. 1;
FIG. 5A illustrates an image captured by the image sensor, and symbols to be superimposed on the image;
FIG. 5B illustrates a superimposed image generated by superimposing the symbols on the image generated by the image sensor;
FIG. 5C illustrates generation of three dimensionally transformed symbols for superimposing on the image generated by the image sensor;
FIG. 5D illustrates a display screen that displays a superimposed image for indicating positions of one or more tidal currents, and a sub-display for indicating directions of respective tidal currents;
FIG. 5E illustrates the display screen that displays the superimposed image for indicating positions of tidal currents, and an external display screen for indicating directions of tidal currents; and
FIG. 6 is a flowchart illustrating a method for superimposing tidal current information on an image displayed on a display screen, in accordance with an embodiment of the present disclosure.

### DETAILED DESCRIPTION OF THE INVENTION

Example apparatus are described herein. Other example embodiments or features may further be utilized, and other changes may be made, without departing from the claimed subject matter presented herein. In the following detailed description, reference is made to the accompanying drawings, which form a part thereof.

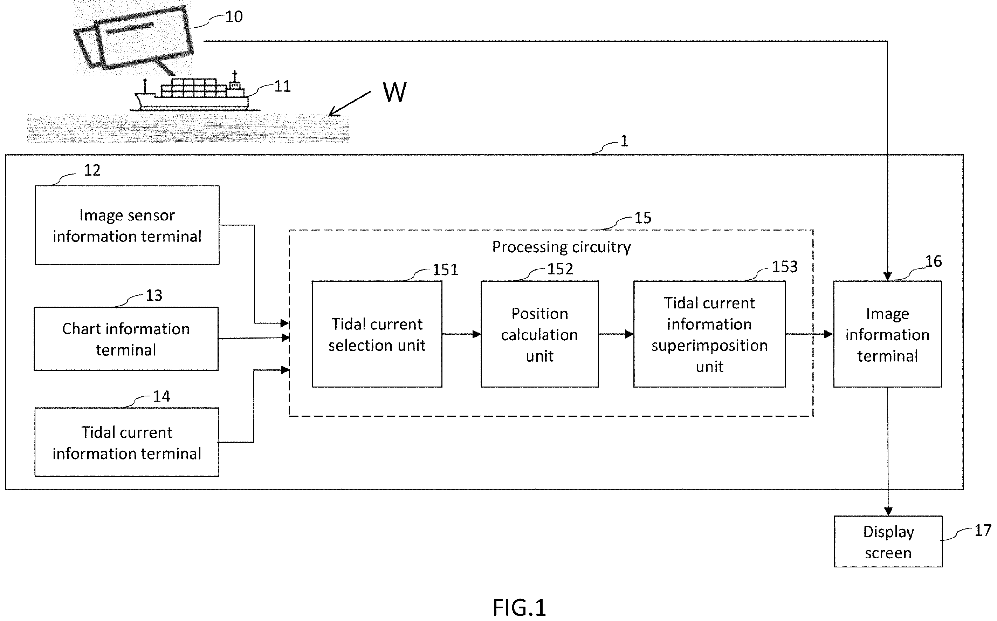

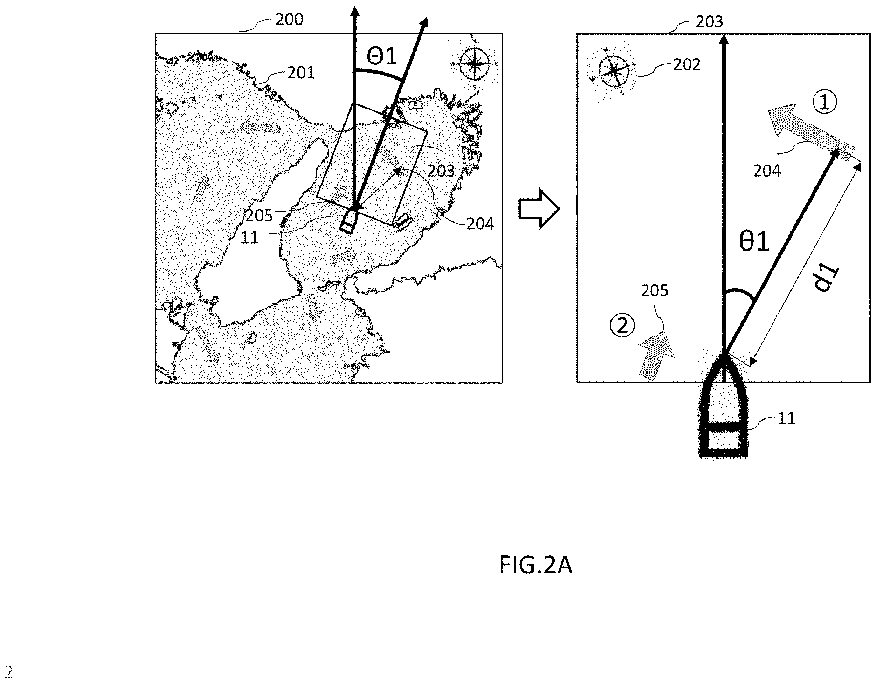

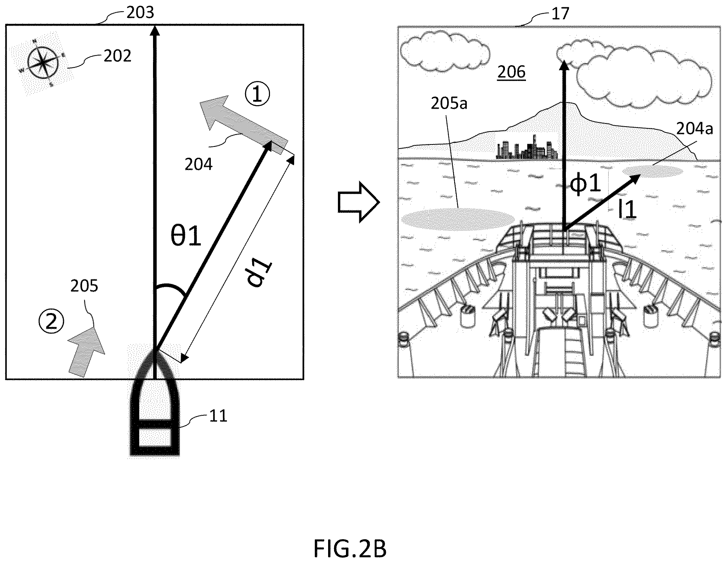

FIG. 1 is a block diagram illustrating an entire configuration of an augmented reality (AR) based tidal current display device 1 in which an image sensor 10 is attached to a movable body 11 according to one embodiment of the present disclosure. FIG. 2A illustrates a chart 200 of a region 201 including the movable body 11, and a sub-region 203 in the chart 200 that has a reference axis with respect to a heading direction of the movable body 11. FIG.2B illustrates the superimposing of tidal current information on an image captured by the image sensor 10.

Next, mainly referring to FIG. 1, the image sensor 10 (hereinafter also referred to as camera 10) may be attached to the movable body 11 (hereinafter also referred to as ship 11, and electrically connected to the display device 1.

The tidal current display device 1 of this embodiment may be located on-board the ship 11 and provided in electrical connection to the camera 10 as the ship instrument for purposes as will be explained in detail later herein.

The camera 10 may be configured as, for example, a limited-viewing angle or a wide-angle video camera which images the water surface W in the vicinity, or around at least a portion of the perimeter of the ship 11. This camera 10 may have a live output function, capable of generating video data (image data) as the imaged result on real time., and outputting it to a display screen 17. As illustrated in FIG. 1, the camera 10 may be installed in the ship 11 so that an imaging direction generally faces onto the water surface W forward of the hull.

The camera 10 may be attached to the ship 11 through a rotating mechanism (not illustrated) and, therefore, the imaging direction can be changed in a given angle range on the basis of the hull of the ship 11 by inputting a signal for instructing pan/tilt from the display device 1. Moreover, as the height and the posture of the ship 11 may change due to waves etc., the height h of the camera 10 may change with respect to the water surface W.

The AR based tidal current display device 1 may be communicatively coupled to the display screen 17 for generating an image expressing the situation around the movable body 11 using AR based on, among other things, a position and azimuthal orientation of the camera 10..

The display screen 17 may be configured as, for example, a display screen that forms part of a navigation assisting device to which a ship operator who operates the ship 11 refers. However, the display screen 17 is not limited to the above configuration, and, for example, it may be a display screen for a portable computer which is carried by a ship operator's assistant who monitors the surrounding situation from the ship 11, a display screen for a passenger to watch in the cabin of the ship 11, or a display part for a head mounted display, such as a wearable glass, worn by a passenger. In an embodiment of the present disclosure, the camera 10 and display screen 17 are external to the display device 1. In another embodiment of the present disclosure, the camera 10, and the display screen 17 are an integral part of the display device 1. Additionally, or optionally, the image sensor 10, the display screen 17 and the AR based tidal current display device 1, together forms an AR based navigation apparatus for facilitating a user to navigate the ship 11 across the sea.

The AR based tidal current display device 1 may also be connected to variety of peripheral devices including, but not limited to, a keyboard and a mouse which the user may operate for performing various functions consistent with the present disclosure. For example, the user can provide various kinds of instructions to the AR based tidal current display device 1 and the camera 10 about generation of an image by operating the keyboard and/or the mouse. The instructions may include the pan/tilt operation of the camera 10, setting of displaying or not-displaying of various types of information, and a setup of a viewpoint from which the image is captured.

Next, a configuration of the AR based tidal current display device 1 is described in detail mainly referring to FIG. 1. The AR based tidal current display device 1 includes an image sensor information terminal 12, a chart information terminal 13, a tidal current information terminal 14, a processing circuitry 15, and an image information terminal 16. The image information terminal 16 is configured to receive an image captured by the image sensor 10, and output the image data to the display screen 17.

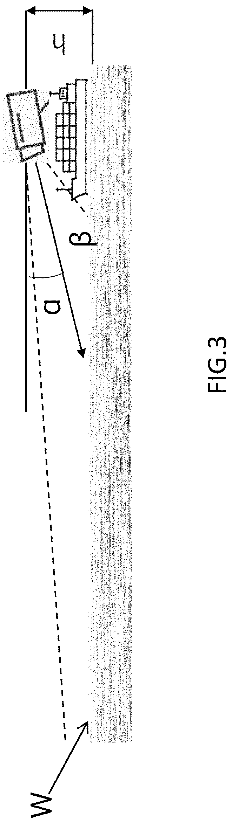

The image sensor information terminal 12 is configured to receive and store image sensor information including a position and an azimuthal orientation of the image sensor 10 with respect to a reference axis of a global geographical chart. As shown in FIG. 3, the image sensor information may further include a height (h) of the image sensor 10 from the water surface (W), a depression angle (α) of the image sensor 10 and a viewing angle (β) of the image sensor 10. The image sensor 10 is fixedly attached to the ship 11, and therefore, the position of the image sensor 10 on the chart 200 is assumed to be similar to a position of the ship 11 in the chart 200, and a heading direction of the ship 11 is used to determine the azimuthal orientation of the image sensor 10, and vice versa.

Referring back to FIG.1, the chart information terminal 13 is configured to receive and store the geographical chart 200 of the region 201 including the ship 11 based on electronic nautical chart information stored beforehand.

The tidal current information terminal 14 is configured to receive and store tidal current information including positions of tidal currents on the water surface (W) from an external communication equipment, for example, a land station, a Global Navigation Satellite System (GNSS) receiver, an Electronic Chart Display and Information System (ECDIS), an Automated Identification System (AIS) receiver, a radar device etc. The tidal current information may further include directions and speeds of the tidal currents. The tidal current information terminal 14 is generally configured to store tidal current information of tidal currents of the region 201 including the ship 11. The tidal current information terminal 14 is configured to store the tidal current information with respect to a reference axis of the chart 200, which means that the tidal current information terminal 14 is configured to store chart/global co-ordinates of the tidal currents in the region 201.

Referring to FIGs.1, 2A and 2B, the processing circuitry 15 includes a tidal current selection unit 151 that selects one or more tidal currents 204 and 205 located in a field of view of the image sensor 10 based on the tidal current information, a position calculation unit 152 that calculates a corresponding display position of each selected tidal current 204 and 205 on the display screen 17 based on the tidal current information and the image sensor information, and a tidal current information superimposition unit 153 that generates symbols 204a and 205a for each selected tidal current 204 and 205 to indicate position of each tidal current 204 and 205 on an image 206 displayed on the display screen 17. As shown, each of the symbols 204a and 205a is configured in the shape of a circular marker for indicating position of corresponding tidal currents 204 and 205 on the image 206. Although, the symbols 204a and 205a are shown to be circular markers, it would be apparent to one of ordinary skill in the art, that the symbols 204a and 205a may include other configurations such as elliptical or square markers to indicate the positions of respective tidal currents on the image 206 displayed on the display screen 17.

The tidal current superimposition unit 153 outputs the symbols 204a and 205a to the display screen 17 to superimpose the symbols 204a and 205a on the image 206 captured by the image sensor 10 and display the superimposed image to provide visual information about positions of the tidal currents 204 and 205 with respect to sea surface, and in a manner which is easy for a user to comprehend.

In the context of the present disclosure, the processing circuitry 15 includes a processor, computer, microcontroller, or other circuitry that controls the operations of various components such as the operation panel, and the memory. The processing circuitry 15 may execute software, firmware, and/or other instructions, for example, that are stored on a volatile or non-volatile memory, or otherwise provided to the processing circuitry 15.

Referring to FIGs. 1, 2A and 3 together, the tidal current selection unit 151 receives the image sensor information, chart information and tidal current information from the image sensor information terminal 12, chart information terminal 13, and the tidal current information terminal 14 respectively. The tidal current selection unit 151 operably selects one or more tidal currents 204 and 205 located in a field of view 203, or stated differently, a viewing angle (β) of the image sensor 10. More specifically, the tidal current selection unit 151 receives the chart 200 of the region 201 surrounding the movable body 11, determines the sub-region 203 based on the position and azimuthal orientation of the image sensor 10, and selects the first and second tidal currents 204 and 205 in the sub-region 203 based on the tidal current information.

Although two selected tidal currents are shown herein, it would be apparent to one of ordinary skill in the art that the tidal current selection unit 151 may select more than or less than two tidal currents.

Referring to FIGs.1,2A, 2B, 3, and 4, the position calculation unit 152 is configured to calculate a position of each selected tidal current 204 and 205 to be displayed on the display screen 17 based on the image sensor information and the tidal current information. More specifically, the position calculation unit 152 is configured to calculate display coordinates of the first and second tidal currents 204 and 205 for displaying on the display screen 17.

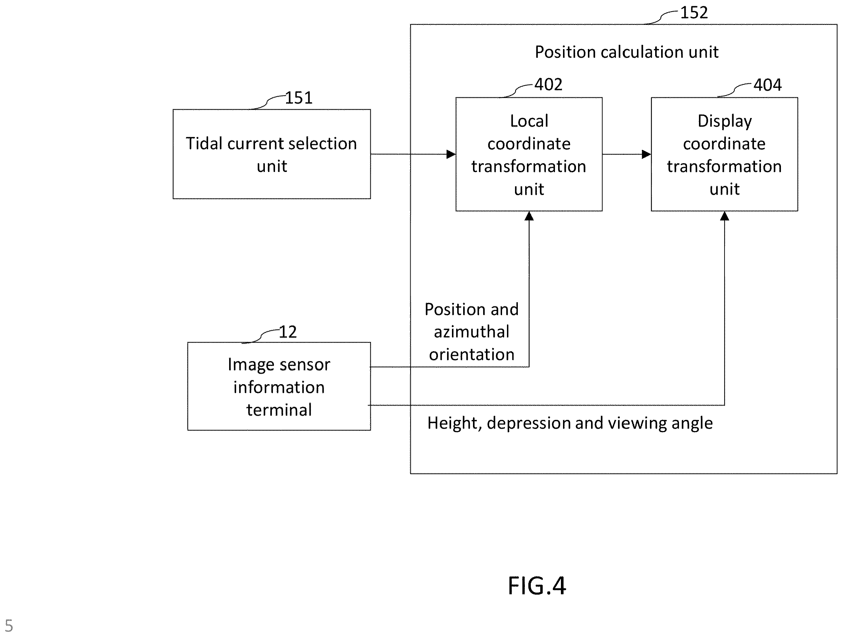

A configuration of the position calculation unit 152 is described in detail mainly referring to FIG. 4. The position calculation unit 152 includes a local coordinate transformation unit 402 that receives and converts chart coordinates of each selected tidal current 204 and 205 to corresponding local coordinates based on the position and the azimuthal orientation of the image sensor 10. In the context of the present disclosure, a chart coordinate is a position on the chart 200, and a local coordinate is a position in the sub-region 203 with respect to the reference axis 202 in relation to a heading direction of the movable body 11.

The position calculation unit 152 further includes a display coordinate transformation unit 404 that receives and converts local coordinates of each selected tidal current 204 and 205 to corresponding display coordinates based on the height (h) of the image sensor 10 from the water surface W, and a depression angle (α) and a viewing angle (β) of the image sensor 10. In the context of the present disclosure, a display coordinate corresponds to a display position on the display screen 17. Thus, the position calculation unit 152 receives the chart coordinates of the tidal currents 204 and 205 in the chart 200, and generates corresponding display coordinates for displaying on the display screen 17.

Additionally, or optionally, the local coordinate transformation unit 402 receives a direction and a velocity of each selected tidal current 204 and 205 from the tidal current selection unit 151 , and determines a direction and a velocity associated with each tidal current 204 and 205 in the sub-region 203 based on the position and the azimuthal orientation of the image sensor 10. As illustrated with reference to FIG.2A, the direction of the tidal currents 204 and 205 in the chart 200 is with respect to a global reference axis, and the direction of the tidal currents 204 and 205 in the sub-region 203 is with respect to the reference axis 202 in relation to the heading direction of the movable body 11.

Based on the direction and velocity associated with each selected tidal current 204 and 205 in the sub-region 203, the display coordinate transformation unit 404 calculates, for example, using mathematical and/or graphical transformations, the direction and velocity of each selected tidal current 204 and 205 on the display screen 17 based on the height h of the image sensor 10 from the water surface W, a depression angle α and a viewing angle β of the image sensor 10. Thus, the position calculation unit 152 receives the direction of the tidal currents 204 and 205 with respect to the chart 200, and generate direction information of the tidal currents 204 and 205 for displaying on the display screen 17.

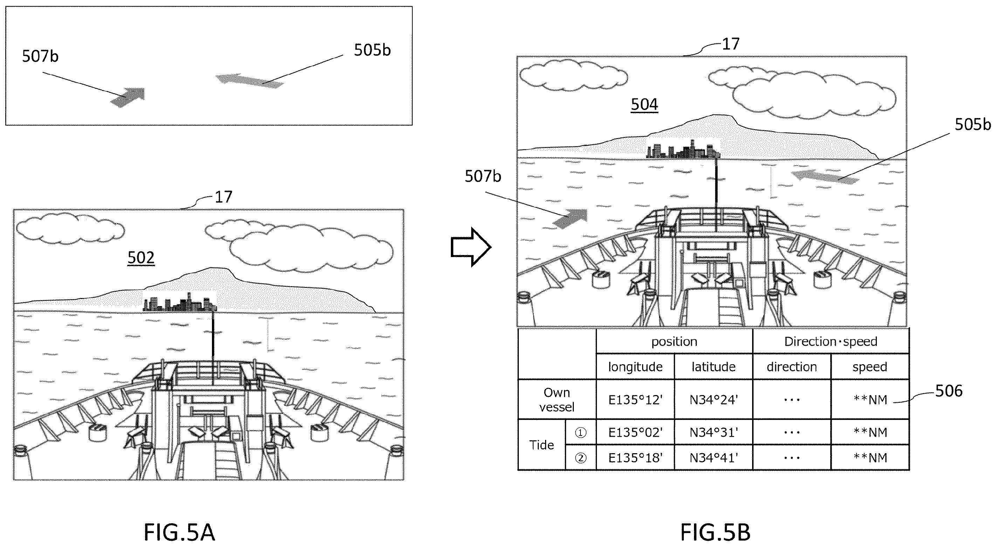

Referring to FIGs.1, 5A and 5B, the tidal current information superimposition unit 153 generates symbols 505b and 507b to indicate position and direction of respective tidal currents on an image 502 displayed on the display screen 17, based on information generated by the position calculation unit 152. The tidal current information superimposition unit 153 further superimposes the symbols 505b and 507b on the image 502 to generate a superimposed image 504 to indicate positions and directions of respective tidal currents in the superimposed image 504. The symbols 505b and 507b may be configured, for example, in the shape of an arrow having an arrowhead to indicate a direction of the corresponding tidal current.

Additionally, or optionally, a length of the arrow, a thickness of the arrow, and a color of the arrow in the superimposed image 504 may be varied based on a current speed of the corresponding tidal current. For instance, to indicate a weak (slow-speed) tidal current on the image, a short or thin sized arrow may be used. Further, such arrow may be rendered with the use of a green or yellow color for superimposing on the image 502. Alternatively, to indicate a strong (high-speed) tidal current on the image, a long or thick sized arrow may be superimposed on the image 502. Additionally, or optionally, the long and/or thick sized arrow may be further rendered graphically on the image 502 with the use of, for example, a red color. Additionally, the tidal current superimposition unit 153 may generate the symbols 505b and 507b based on, and to indicate, depths of respective tidal currents.

With respect to the foregoing explanation of the symbols, the characteristics of the symbols 505b and 507b are not limited to any specific shape, size, or color. These characteristics, that is, the shapes, sizes, and colors may be varied to suit one or more maritime code requirements and/or other application specific requirements.

Further, when displaying the symbols 505b and 507b superimposedly on the image 502, the limited display area of the display screen 17 can be effectively utilized by simultaneously displaying additional information 506 including tabulation of directions and speeds. Optionally, the positions of the symbols 505b and 507b may be changed, as required, or even removed from the superimposed image 504 so that the graphics pertaining to the image 504 are not obscured, or hidden, by the symbols 505b and 507b as much as possible.

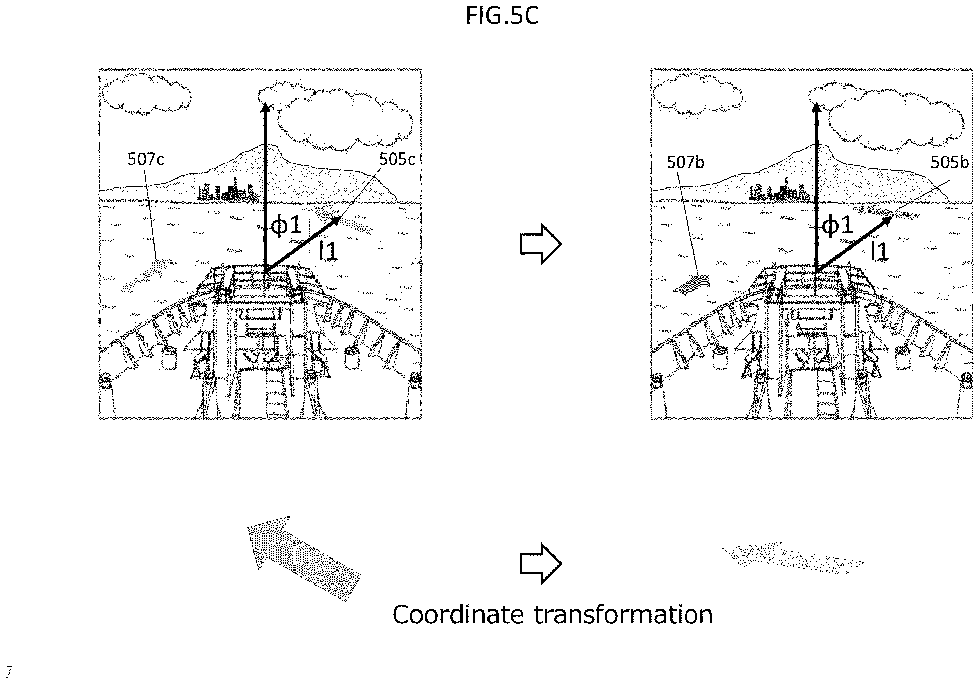

Additionally, the tidal current information superimposition unit 153 generates the symbols 505b and 507b parallel to the water surface W, indicating the direction and speed of corresponding tidal current based on the depression angle α of the image sensor 10. Referring to FIG.5C, the symbols 505b and 507b may be generated parallel to the water surface W based on transformation of two dimensional symbols 505c and 507c into corresponding three dimensional symbols 505b and 507b respectively.

Moreover, the symbols 505b and 507b may be displayed so as to incline according to the declination or depression angle β of the camera 10. By displaying in such a way, graphics pertaining to the water surface W can be obtained from image sensor 10 and such graphics is always available for visual observation by the user and for the superimposition of the symbols 505b and 507b when needed even when, for example, the hull and the image sensor 10 incline with respect to the water surface W.

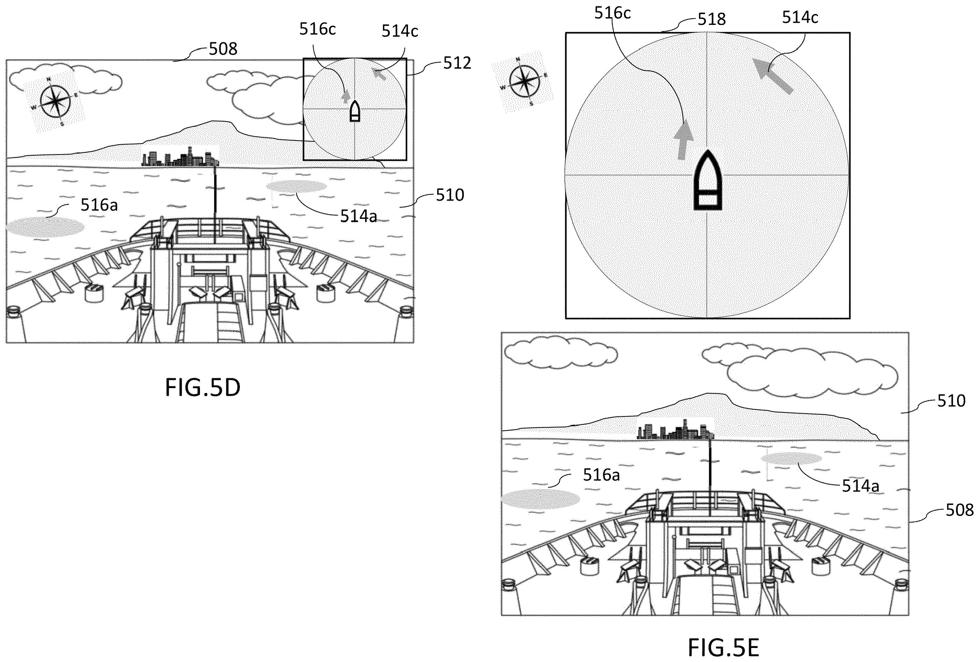

FIG.5D illustrates a display screen 508 that displays a superimposed image 510 for indicating positions of one or more tidal currents, and a sub-display 512 for indicating directions of tidal currents whose position is shown in the superimposed image 510. The sub-display 512 has a reference axis in relation to the heading direction of the movable body 11.

The superimposed image 510 includes symbols 514a and 516a (similar to the symbols 204a and 205a) for indicating positions of one or more tidal currents on an image captured by the image sensor 10.. The sub-display 512 displays two-dimensional symbols 514c and 516c (similar to the symbols 505c and 507c) for indicating directions of tidal currents corresponding to symbols 514a and 516a of the superimposed image 510. The symbols 514a, 516a, and 514c and 516c are generated by the tidal current superimposition unit 153. The superimposed image 510 and the sub-display 512 are synchronous in time with respect to each other. A change in the superimposed image 510 is reflected in the sub-display 512 as well.

FIG.5E illustrates the display screen 508 that displays the superimposed image 510 for indicating positions of one or more tidal currents, and an external display screen 518 for indicating directions of tidal currents whose position is shown in the superimposed image 510. The external display screen 518 has a reference axis in relation to the heading direction of the movable body 11.

The superimposed image 510 includes symbols 514a and 516a (similar to the symbols 204a and 205a) for indicating positions of one or more tidal currents on an image captured by the image sensor 10. The external screen 518 displays two-dimensional symbols 514c and 516c (similar to the symbols 204c and 205c) for indicating directions of tidal currents corresponding to symbols 514a and 516a of the superimposed image 510. The symbols 514a, 516a, 514c and 516c are generated by the tidal current superimposition unit 153. The contents displayed on the display screen 508 and the external display screen 518 are synchronous in time with respect to each other.

Additionally, or optionally, the position calculation unit 152 may also predict future positions of one or more tidal currents displayed on an image captured by the image sensor. Accordingly, the tidal current information superimposition unit 153 may also generate the symbols to correspond with the predicted future positions and superimpose the generated symbols on the image for displaying on the display screen 17.

The ship instruments (information source of the additional display information) connected to the display device 1 is not limited to what is described in FIG.1, and other ship instruments may be included.

Further, the present disclosure is applicable not only to the ship which travels on the sea, but may also be applicable to arbitrary water-surface movable bodies which can travel, for example, the sea, a lake, or a river.

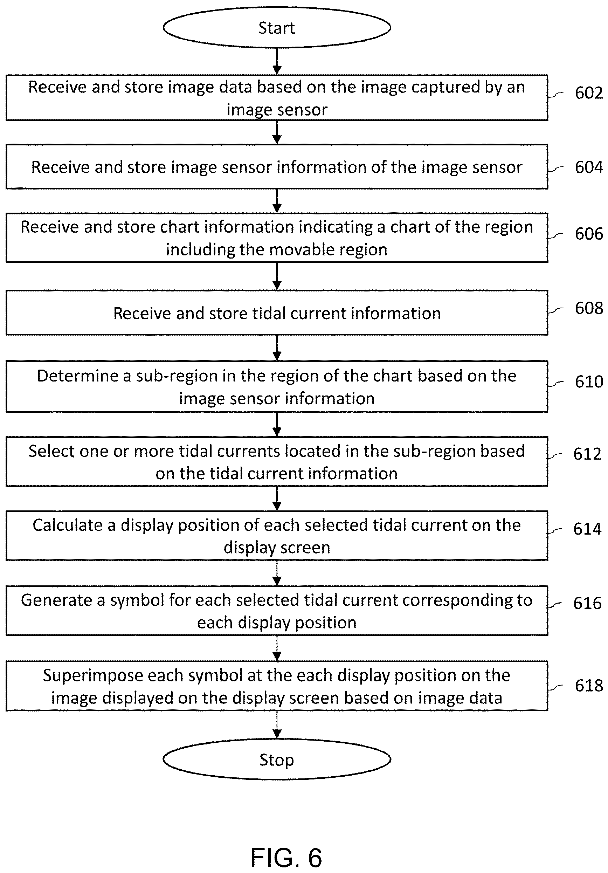

FIG. 6 is a flowchart illustrating a method for superimposing tidal current information on an image displayed on the display screen 17, in accordance with an embodiment of the present disclosure.

At step 602, image data based on the image captured by an image sensor 10 is received and stored by the image information terminal 16.

At step 604, image sensor information including a position and an azimuthal orientation of the image sensor 10 attached to the movable body 11 on a water surface (W) is received and stored in the image sensor information terminal 12.

At step 606, chart information indicating a chart 200 of the region 201 including the movable body 11 is received and stored in the chart information terminal 13.

At step 608, tidal current information pertaining to one or more locations in the chart 200 is received and stored in the tidal current information terminal 14.

At step 610, the tidal current selection unit 151 determines a sub-region 203 in the region 201 of the chart 200 based on the image sensor information.

At step 612, the tidal current selection unit 151 selects one or more tidal currents 204 and 205 located in the sub-region 203 based on the tidal current information.

At step 614, the position calculation unit 152 calculates a display position of each selected tidal current on the display screen 17 based on the tidal current information and the image sensor information.

At step 616, the tidal current superimposition unit 153 generates a symbol for each selected tidal current corresponding to each display position.

At step 618, the tidal current superimposition unit 153 superimposes each symbol at the each display position on the image displayed on the display screen 17 based on the image data.

### DESCRIPTION OF REFERENCE CHARACTERS

- 1: Tidal current display device
- 10: Camera (Image sensor)
- 11: Ship (Movable body)
- 12: Image sensor information terminal
- 13: Chart information terminal
- 14: Tidal current information terminal
- 15: Processing circuitry
- 16: Image information terminal
- 17: Display screen
- W: Water surface
- 151: Tidal current selection unit
- 152: Position calculation unit
- 153: Tidal current information superimposition unit
- 200: Chart
- 201: Region including the movable body
- 202: Reference axis of sub-region
- 203: Sub-region of chart
- 204: One tidal current
- 205: Another tidal current
- 204a: Symbol for indicating position of one tidal current
- 205a: Symbol for indicating position of another tidal current
- 206, 502: Image captured by the image sensor
- 402: Local coordinate transformation unit
- 404: Display coordinate transformation unit
- 504: Superimposed image
- 505b: Symbol for indicating direction of one tidal current
- 506: Additional information
- 507b: Symbol for indicating direction of another tidal current
- 505c: Two-dimensional symbol for indicating direction of one tidal current
- 507c: Two-dimensional symbol for indicating direction of another tidal current
- 508: Display screen
- 510: Superimposed image
- 512: Sub-display
- 514a: Symbol indicating position of tidal current
- 516a: Symbol indicating position of another tidal current
- 514c: Symbol indicating direction of tidal current
- 516c: Symbol indicating direction of tidal current
- 518: External display screen

## Claims

1. An augmented reality, AR, based tidal current display device (1) for superimposing tidal current information on an image displayed on a display screen (17), comprising:
an image information terminal (16) configured to receive an image captured by an image sensor (10) and output image data for displaying on the display screen (17);
an image sensor information terminal (12) configured to receive and store image sensor information including a position and an azimuthal orientation of the image sensor (10) attached to a movable body (11) on a water surface (W);
a chart information terminal (13) configured to receive and store chart information indicating a chart (200) of the region (201) including the movable body (11);
a tidal current information terminal (14) configured to receive and store tidal current information including positions of tidal currents on the water surface (W) pertaining to one or more locations in the chart from an external communication equipment;
a tidal current selection unit (151) configured to:
determine a sub-region (203) in the region (201) of the chart (200) based on the image sensor information; and
select one or more tidal currents (204, 205) located in the sub-region (203);
a position calculation unit (152) configured to, for each selected tidal current, calculate a corresponding display position on the display screen (17) based on the tidal current information and the image sensor information;
a tidal current superimposition unit (153) configured to generate a symbol for each selected tidal current to indicate each display position on the display screen (17), and output each symbol to the display screen (17), wherein the symbol is configured in the shape of a marker indicating a display position of corresponding tidal current on the display screen (17); and
wherein the tidal current superimposition unit (153) is further configured to superimpose each symbol at the respective display position on an image displayed on the display screen based on the image data.

2. The AR based tidal current display device of claim 1, further comprising: the tidal current selection unit (151) is further configured to:
receive a chart (200) of a region (201) including the movable body (11) from the chart information receiving terminal (13);
determine a sub-region (203) in the received chart (201) based on the position and azimuthal orientation of the image sensor (10), wherein the sub-region (203) has a reference axis (202) in relation to a heading direction of the movable body (11); and
select the one or more tidal currents (204, 205) located in the sub-region (203) based on the tidal current information.

3. The AR based tidal current display device of claim 2, wherein the position calculation unit (152) comprises:
a local coordinate transformation unit (402) configured to receive chart coordinates of the tidal current to corresponding local coordinates based on the position and the azimuthal orientation of the image sensor (10), wherein a chart coordinate is a position on the chart (200), and a local coordinate is a position in the sub-region (203).

4. The AR based tidal current display device of claim 3, wherein the position calculation unit (152) further comprises:
a display coordinate transformation unit (404) configured to receive and convert local coordinates of the tidal current to corresponding display coordinates based on the image sensor information, wherein a display coordinate correspond to a display position on the display screen (17).

5. The AR based tidal current display device of claim 3, wherein:
the local coordinate transformation unit (402) is configured to receive a direction and velocity associated with each selected tidal current (204, 205) from the tidal current selection unit (151) and determine a direction and a velocity associated with each selected tidal current (204, 205) in the sub-region (203) based on the position and the azimuthal orientation of the image sensor (10); and
the display coordinate transformation unit (404) is configured to receive the direction and velocity of each selected tidal current (204, 205) in the sub-region, calculate a direction of each selected tidal current (204, 205) on an image displayed on the display screen (17), based on a height (h) of the image sensor (10) from the water surface (W), a depression angle (α) of the image sensor (10) and a viewing angle (β) of the image sensor (10).

6. The AR based tidal current display device of claim 4, wherein the tidal current superimposition unit is further configured to:
generate a symbol indicating at least one of: a direction and a velocity of respective tidal current on the image at respective display position; and
output each symbol to the display screen.

7. The AR based tidal current display device of claim 6, wherein the tidal current superimposition unit (153) is further configured to:
output the symbol for indicating direction and current speed of each tidal current for displaying on at least one of: a sub-display on the display screen, and an external display screen.

8. The AR based tidal current display device of claim 7, wherein a characteristic of each symbol including a length of the arrow, a thickness of the arrow, and a color of the arrow on the image is varied based on a current speed of corresponding tidal current.

9. The AR based tidal current display device of claim 8, wherein the tidal current superimposition unit (153) is further configured to generate the symbol based on, and to indicate, depths of respective selected one or more tidal currents.

10. The AR based tidal current display device (1) of claim 1, wherein the tidal current superimposition unit (153) is further configured to:
predict one or more future display positions of one or more selected tidal currents on an image displayed on the display screen (17);
generate one or more symbols corresponding to the one or more predicted future positions; and
superimpose the one or more symbols on the image displayed on the display screen (17).

11. An augmented reality (AR) navigation apparatus, for superimposing tidal current information on an image displayed on a display screen (17), comprising:
an image sensor (10), attached onto the movable body (11), configured to capture the image and output image data;
an image sensor information terminal (12) configured to receive and store image sensor information including a position and an azimuthal orientation of the image sensor (10) attached to the movable body (11) on a water surface (W);
the image information terminal is further configured to output image data for displaying on the display screen;
a chart information terminal (13) configured to receive and store chart information indicating a chart (200) of the region (201) including the movable body (11);
a tidal current information terminal (14) configured to receive and store tidal current information pertaining to one or more locations in the chart (200); and
a tidal current selection unit (151) configured to:
determine a sub-region (203) in the region (201) of the chart (200) based on the image sensor information; and
select one or more tidal currents (204, 205) located in the sub-region (203);
a position calculation unit (152) configured to:
calculate a display position of each selected tidal current on the display screen (17) based on the tidal current information and the image sensor information; and
a tidal current superimposition unit (153) configured to:
generate a symbol for each selected tidal current corresponding to each display position, wherein the symbol is configured in the shape of a marker indicating the display position of the corresponding tidal current on the display screen (17); and
superimpose each symbol at the each display position on the image displayed on the display screen based on the image data.

12. The AR navigation apparatus of claim 11, further comprising:
the display screen configured to display the image, based on the image data and display the symbols superimposed on the image.

13. A method for superimposing tidal current information on an image displayed on a display screen (17), comprising:
receiving and storing image data based on the image captured by an image sensor (10);
receiving and storing image sensor information including a position and an azimuthal orientation of the image sensor (10) attached to a movable body (11) on a water surface (W);
receiving and storing chart information indicating a chart (200) of the region (201) including the movable body (11);
receiving and storing tidal current information pertaining to one or more locations in the chart (200);
determining a sub-region (203) in the region (201) of the chart (200) based on the image sensor information;
selecting one or more tidal currents (204, 205) located in the sub-region (203), based on the tidal current information;
calculating a display position of each selected tidal current on the display screen (17) based on the tidal current information and the image sensor information;
generating a symbol for each selected tidal current corresponding to each display position, wherein the symbol is configured in the shape of a marker indicating the display position of the corresponding tidal current on the display screen (17); and
superimposing each symbol at the each display position on the image displayed on the display screen based on the image data.

## Patentansprüche

1. Auf erweiterter Realität, AR, basierte Gezeitenstrom-Anzeigevorrichtung (1) zum Überlagern von Gezeitenstrominformationen auf einem auf einem Anzeigebildschirm (17) angezeigten Bild, aufweisend:
ein Bildinformations-Endgerät (16), das so konfiguriert ist, dass es ein mittels eines Bildsensors (10) aufgenommenes Bild empfängt und Bilddaten zum Anzeigen auf dem Anzeigebildschirm (17) ausgibt;
ein Bildsensorinformations-Endgerät (12), das so konfiguriert ist, dass es Bildsensorinformationen empfängt und speichert, die eine Position und eine azimutale Orientierung des Bildsensors (10) enthalten, der an einem beweglichen Körper (11) auf einer Wasseroberfläche (W) angebracht ist;
ein Karteninformations-Endgerät (13), das so konfiguriert ist, dass es Karteninformationen empfängt und speichert, die eine Karte (200) des Gebiets (201) einschließlich des beweglichen Körpers (11) angeben;
ein Gezeitenstrominformations-Endgerät (14), das so konfiguriert ist, dass es Gezeitenstrominformationen, die Positionen von Gezeitenströmen auf der Wasseroberfläche (W) enthalten, die zu einem oder mehreren Orten in der Karte gehören, von einem externen Kommunikationsgerät empfängt und speichert;
eine Gezeitenstrom-Auswahleinheit (151), die so konfiguriert ist, dass sie:
ein Teilgebiet (203) im Gebiet (201) der Karte (200) basierend auf den Bildsensorinformationen bestimmt; und
einen oder mehrere, im Teilgebiet (203) lokalisierte Gezeitenströme (204, 205) auswählt;
eine Positionsberechnungseinheit (152), die so konfiguriert ist, dass sie für jeden ausgewählten Gezeitenstrom eine entsprechende Anzeigeposition auf dem Anzeigebildschirm (17) basierend auf den Gezeitenstrominformationen und den Bildsensorinformationen berechnet;
eine Gezeitenstrom-Überlagerungseinheit (153), die so konfiguriert ist, dass sie ein Symbol für jeden ausgewählten Gezeitenstrom erzeugt, um jede Anzeigeposition auf dem Anzeigebildschirm (17) anzugeben, und jedes Symbol an den Anzeigebildschirm (17) ausgibt, wobei das Symbol in der Form einer Markierung konfiguriert ist, die eine Anzeigeposition eines entsprechenden Gezeitenstroms auf dem Anzeigebildschirm (17) angibt; und
wobei die Gezeitenstrom-Überlagerungseinheit (153) ferner so konfiguriert ist, dass sie jedes Symbol an der jeweiligen Anzeigeposition auf einem basierend auf den Bilddaten auf dem Anzeigebildschirm angezeigten Bild überlagert.

2. AR-basierte Gezeitenstrom-Anzeigevorrichtung nach Anspruch 1, wobei:
die Gezeitenstrom-Auswahleinheit (151) ferner so konfiguriert ist, dass sie:
eine Karte (200) eines Gebiets (201) einschließlich des beweglichen Körpers (11) vom Karteninformationen empfangenden Endgerät (13) empfängt;
ein Teilgebiet (203) in der empfangenen Karte (201) basierend auf der Position und azimutalen Orientierung des Bildsensors (10) bestimmt, wobei das Teilgebiet (203) eine Bezugsachse (202) in Bezug auf eine Fahrtrichtung des beweglichen Körpers (11) aufweist; und
den einen oder die mehreren, im Teilgebiet (203) lokalisierten Gezeitenströme (204, 205) basierend auf den Gezeitenstrominformationen auswählt.

3. AR-basierte Gezeitenstrom-Anzeigevorrichtung nach Anspruch 2, wobei die Positionsberechnungseinheit (152) aufweist:
eine Einheit (402) zur Transformation lokaler Koordinaten, die so konfiguriert ist, dass sie Kartenkoordinaten des Gezeitenstroms zu entsprechenden lokalen Koordinaten basierend auf der Position und der azimutalen Orientierung des Bildsensors (10) empfängt, wobei es sich bei einer Kartenkoordinate um eine Position auf der Karte (200) handelt und es sich bei einer lokalen Koordinate um eine Position im Teilgebiet (203) handelt.

4. AR-basierte Gezeitenstrom-Anzeigevorrichtung nach Anspruch 3, wobei die Positionsberechnungseinheit (152) ferner aufweist:
eine Einheit (404) zur Transformation von Anzeigekoordinaten, die so konfiguriert ist, dass sie lokale Koordinaten des Gezeitenstroms zu entsprechenden Anzeigekoordinaten basierend auf den Bildsensorinformationen empfängt und umwandelt, wobei eine Anzeigekoordinate einer Anzeigeposition auf dem Anzeigebildschirm (17) entspricht.

5. AR-basierte Gezeitenstrom-Anzeigevorrichtung nach Anspruch 3, wobei:
die Einheit (402) zur Transformation lokaler Koordinaten so konfiguriert ist, dass sie eine Richtung und Geschwindigkeit, die mit jedem ausgewählten Gezeitenstrom (204, 205) verbunden sind, von der Gezeitenstrom-Auswahleinheit (151) empfängt und eine Richtung und eine Geschwindigkeit, die mit jedem ausgewählten Gezeitenstrom (204, 205) im Teilgebiet (203) verbunden sind, basierend auf der Position und der azimutalen Orientierung des Bildsensors (10) bestimmt; und
die Einheit (404) zur Transformation von Anzeigekoordinaten so konfiguriert ist, dass sie die Richtung und Geschwindigkeit jedes ausgewählten Gezeitenstroms (204, 205) im Teilgebiet (203) empfängt und eine Richtung jedes ausgewählten Gezeitenstroms (204, 205) auf einem auf dem Anzeigebildschirm (17) angezeigten Bild basierend auf einer Höhe (h) des Bildsensors (10) von der Wasseroberfläche (W) aus, eines Neigungswinkels (α) des Bildsensors (10) und eines Blickwinkels (β) des Bildsensors (10) berechnet.

6. AR-basierte Gezeitenstrom-Anzeigevorrichtung nach Anspruch 4, wobei die Gezeitenstrom-Überlagerungseinheit ferner so konfiguriert ist, dass sie:
ein Symbol erzeugt, das eine Richtung und/oder eine Geschwindigkeit eines jeweiligen Gezeitenstroms auf dem Bild an einer jeweiligen Anzeigeposition angibt; und
jedes Symbol an den Anzeigebildschirm ausgibt.

7. AR-basierte Gezeitenstrom-Anzeigevorrichtung nach Anspruch 6, wobei die Gezeitenstrom-Überlagerungseinheit (153) ferner so konfiguriert ist, dass sie:
das Symbol zum Angeben einer Richtung und einer aktuellen Geschwindigkeit jedes Gezeitenstroms zum Anzeigen auf einer Teilanzeige auf dem Anzeigebildschirm und/oder einem externen Anzeigebildschirm ausgibt.

8. AR-basierte Gezeitenstrom-Anzeigevorrichtung nach Anspruch 7, wobei eine Eigenschaft jedes Symbols, die eine Länge des Pfeils, eine Dicke des Pfeils und eine Farbe des Pfeils auf dem Bild einschließt, basierend auf einer aktuellen Geschwindigkeit eines entsprechenden Gezeitenstroms variiert wird.

9. AR-basierte Gezeitenstrom-Anzeigevorrichtung nach Anspruch 8, wobei die Gezeitenstrom-Überlagerungseinheit (153) ferner so konfiguriert ist, dass sie das Symbol basierend auf Tiefen von jeweiligen ausgewählten ein oder mehr Gezeitenströmen erzeugt und diese angibt.

10. AR-basierte Gezeitenstrom-Anzeigevorrichtung (1) nach Anspruch 1, wobei die Gezeitenstrom-Überlagerungseinheit (153) ferner so konfiguriert ist, dass sie:
eine oder mehrere zukünftige Anzeigepositionen eines oder mehrerer ausgewählter Gezeitenströme auf einem auf dem Anzeigebildschirm (17) angezeigten Bild vorhersagt;
ein oder mehr Symbole entsprechend der einen oder den mehreren vorhergesagten zukünftigen Positionen erzeugt; und
das eine oder die mehreren Symbole auf dem auf dem Anzeigebildschirm (17) angezeigten Bild überlagert.

11. Auf erweiterter Realität (AR) basierte Navigationseinrichtung zum Überlagern von Gezeitenstrominformationen auf einem auf einem Anzeigebildschirm (17) angezeigten Bild, aufweisend:
einen an dem beweglichen Körper (11) angebrachten Bildsensor (10), der so konfiguriert ist, dass er das Bild aufnimmt und Bilddaten ausgibt;
ein Bildsensorinformations-Endgerät (12), das so konfiguriert ist, dass es Bildsensorinformationen empfängt und speichert, die eine Position und eine azimutale Orientierung des Bildsensors (10) enthalten, der an dem beweglichen Körper (11) auf einer Wasseroberfläche (W) angebracht ist; wobei das Bildinformations-Endgerät ferner so konfiguriert ist, dass es Bilddaten zum Anzeigen auf dem Anzeigebildschirm ausgibt;
ein Karteninformations-Endgerät (13), das so konfiguriert ist, dass es Karteninformationen empfängt und speichert, die eine Karte (200) des Gebiets (201) einschließlich des beweglichen Körpers (11) angeben;
ein Gezeitenstrominformations-Endgerät (14), das so konfiguriert ist, dass es Gezeitenstrominformationen, die zu einem oder mehreren Orten in der Karte (200) gehören, empfängt und speichert;
eine Gezeitenstrom-Auswahleinheit (151), die so konfiguriert ist, dass sie:
ein Teilgebiet (203) im Gebiet (201) der Karte (200) basierend auf den Bildsensorinformationen bestimmt; und
einen oder mehrere, im Teilgebiet (203) lokalisierte Gezeitenströme (204, 205) auswählt;
eine Positionsberechnungseinheit (152), die so konfiguriert ist, dass sie:
eine Anzeigeposition jedes ausgewählten Gezeitenstroms auf dem Anzeigebildschirm (17) basierend auf den Gezeitenstrominformationen und den Bildsensorinformationen berechnet; und
eine Gezeitenstrom-Überlagerungseinheit (153), die so konfiguriert ist, dass sie:
ein Symbol für jeden ausgewählten Gezeitenstrom entsprechend jeder Anzeigeposition erzeugt, wobei das Symbol in der Form einer Markierung konfiguriert ist, die die Anzeigeposition des entsprechenden Gezeitenstroms auf dem Anzeigebildschirm (17) angibt; und
jedes Symbol an der jeweiligen Anzeigeposition auf dem basierend auf den Bilddaten auf dem Anzeigebildschirm angezeigten Bild überlagert.

12. AR-Navigationseinrichtung nach Anspruch 11, ferner aufweisend:
den Anzeigebildschirm, der so konfiguriert ist, dass er das Bild basierend auf den Bilddaten anzeigt und die auf dem Bild überlagerten Symbole anzeigt.

13. Verfahren zum Überlagern von Gezeitenstrominformationen auf einem auf einem Anzeigebildschirm (17) angezeigten Bild, aufweisend:
Empfangen und Speichern von Bilddaten, die auf dem mittels eines Bildsensors (10) aufgenommenen Bild basieren;
Empfangen und Speichern von Bildsensorinformationen, die eine Position und eine azimutale Orientierung des Bildsensors (10) enthalten, der an einem beweglichen Körper (11) auf einer Wasseroberfläche (W) angebracht ist;
Empfangen und Speichern von Karteninformationen, die eine Karte (200) des Gebiets (201) einschließlich des beweglichen Körpers (11) angeben;
Empfangen und Speichern von Gezeitenstrominformationen, die zu einem oder mehreren Orten in der Karte (200) gehören;
Bestimmen eines Teilgebiets (203) im Gebiet (201) der Karte (200) basierend auf den Bildsensorinformationen;
Auswählen eines oder mehrerer, im Teilgebiet (203) lokalisierter Gezeitenströme (204, 205) basierend auf den Gezeitenstrominformationen;
Berechnen einer Anzeigeposition jedes ausgewählten Gezeitenstroms auf dem Anzeigebildschirm (17) basierend auf den Gezeitenstrominformationen und den Bildsensorinformationen;
Erzeugen eines Symbols für jeden ausgewählten Gezeitenstrom entsprechend jeder Anzeigeposition, wobei das Symbol in der Form einer Markierung konfiguriert ist, die eine Anzeigeposition eines entsprechenden Gezeitenstroms auf dem Anzeigebildschirm (17) angibt; und
Überlagern jedes Symbols an der jeweiligen Anzeigeposition auf dem basierend auf den Bilddaten auf dem Anzeigebildschirm angezeigten Bild.

## Revendications

1. Dispositif d'affichage de courant de marée à réalité augmentée, RA, (1) destiné à superposer des informations de courant de marée sur une image affichée sur un écran d'affichage (17), comprenant :
un terminal d'informations d'image (16) configuré pour recevoir une image capturée par un capteur d'image (10) et délivrer des données d'image pour les afficher sur l'écran d'affichage (17) ;
un terminal d'informations de capteur d'image (12) configuré pour recevoir et stocker des informations de capteur d'image comportant une position et une orientation azimutale du capteur d'image (10) fixé à un corps mobile (11) sur une surface de l'eau (W) ;
un terminal d'informations de carte (13) configuré pour recevoir et stocker des informations de carte indiquant une carte (200) de la région (201) comportant le corps mobile (11) ;
un terminal d'informations de courant de marée (14) configuré pour recevoir et stocker des informations de courant de marée comportant des positions de courants de marée sur la surface de l'eau (W) afférentes à un ou plusieurs emplacements sur la carte à partir d'un équipement de communication externe ;
une unité de sélection de courant de marée (151) configurée pour :
déterminer une sous-région (203) dans la région (201) de la carte (200) sur la base des informations de capteur d'image ; et
sélectionner un ou plusieurs courants de marée (204, 205) situés dans la sous-région (203) ;
une unité de calcul de position (152) configurée pour calculer, pour chaque courant de marée sélectionné, une position d'affichage correspondante sur l'écran d'affichage (17) sur la base des informations de courant de marée et des informations de capteur d'image ;
une unité de superposition de courant de marée (153) configurée pour générer un symbole pour chaque courant de marée sélectionné pour indiquer chaque position d'affichage sur l'écran d'affichage (17), et délivrer chaque symbole à l'écran d'affichage (17), dans lequel le symbole est configuré sous la forme d'un marqueur indiquant une position d'affichage du courant de marée correspondant sur l'écran d'affichage (17) ; et
dans lequel
l'unité de superposition de courant de marée (153) est en outre configurée pour superposer chaque symbole à la position d'affichage respective sur une image affichée sur l'écran d'affichage sur la base des données d'image.

2. Dispositif d'affichage de courant de marée à RA selon la revendication 1, comprenant en outre :
l'unité de sélection de courant de marée (151) est en outre configurée pour :
recevoir une carte (200) d'une région (201) comportant le corps mobile (11) à partir du terminal de réception d'informations de carte (13) ;
déterminer une sous-région (203) dans la carte (201) reçue sur la base de la position et de l'orientation azimutale du capteur d'image (10), dans lequel la sous-région (203) présente un axe de référence (202) par rapport à une direction de cap du corps mobile (11) ; et
sélectionner le ou les courants de marée (204, 205) situés dans la sous-région (203) sur la base des informations de courant de marée.

3. Dispositif d'affichage de courant de marée à RA selon la revendication 2, dans lequel l'unité de calcul de position (152) comprend :
une unité de transformation de coordonnées locales (402) configurée pour recevoir des coordonnées de carte du courant de marée en coordonnées locales correspondantes sur la base de la position et de l'orientation azimutale du capteur d'image (10), dans lequel une coordonnée de carte est une position sur le carte (200), et une coordonnée locale est une position dans la sous-région (203).

4. Dispositif d'affichage de courant de marée à RA selon la revendication 3, dans lequel l'unité de calcul de position (152) comprend en outre :
une unité de transformation de coordonnées d'affichage (404) configurée pour recevoir et convertir des coordonnées locales du courant de marée en coordonnées d'affichage correspondantes sur la base des informations de capteur d'image, dans lequel une coordonnée d'affichage correspond à une position d'affichage sur l'écran d'affichage (17).

5. Dispositif d'affichage de courant de marée à RA selon la revendication 3, dans lequel :
l'unité de transformation de coordonnées locales (402) est configurée pour recevoir une direction et une vitesse associées à chaque courant de marée sélectionné (204, 205) à partir de l'unité de sélection de courant de marée (151) et déterminer une direction et une vitesse associées à chaque courant de marée sélectionné (204, 205) dans la sous-région (203) sur la base de la position et de l'orientation azimutale du capteur d'image (10) ; et
l'unité de transformation de coordonnées d'affichage (404) est configurée pour recevoir la direction et la vitesse de chaque courant de marée sélectionné (204, 205) dans la sous-région, calculer une direction de chaque courant de marée sélectionné (204, 205) sur une image affichée sur l'écran d'affichage (17), sur la base d'une hauteur (h) du capteur d'image (10) à partir de la surface d'eau (W), d'un angle de dépression (α) du capteur d'image (10) et d'un angle de visualisation (β) du capteur d'image (10).

6. Dispositif d'affichage de courant de marée à RA selon la revendication 4, dans lequel l'unité de superposition de courant de marée est en outre configurée pour :
générer un symbole indiquant au moins l'un parmi : une direction et une vitesse du courant de marée respectif sur l'image à la position d'affichage respective ; et
délivrer chaque symbole à l'écran d'affichage.

7. Dispositif d'affichage de courant de marée à RA selon la revendication 6, dans lequel l'unité de superposition de courant de marée (153) est en outre configurée pour :
délivrer le symbole indiquant la direction et la vitesse courante de chaque courant de marée pour l'affichage sur au moins l'un parmi : un sous-affichage sur l'écran d'affichage et un écran d'affichage externe.

8. Dispositif d'affichage de courant de marée à RA selon la revendication 7, dans lequel une caractéristique de chaque symbole comportant une longueur de flèche, une épaisseur de flèche et une couleur de flèche sur l'image est changée en fonction d'une vitesse courante de courant de marée correspondant.

9. Dispositif d'affichage de courant de marée à RA selon la revendication 8, dans lequel l'unité de superposition de courant de marée (153) est en outre configurée pour générer le symbole sur la base, et pour indiquer, des profondeurs d'un ou plusieurs courants de marée sélectionnés respectifs.

10. Dispositif d'affichage de courant de marée à RA (1) selon la revendication 1, dans lequel l'unité de superposition de courant de marée (153) est en outre configurée pour :
prédire une ou plusieurs positions d'affichage futures d'un ou plusieurs courants de marée sélectionnés sur une image affichée sur l'écran d'affichage (17) ;
générer un ou plusieurs symboles correspondant à la ou aux positions futures prédites ; et
superposer le ou les symboles sur l'image affichée sur l'écran d'affichage (17).

11. Appareil de navigation à réalité augmentée (RA) destiné à superposer des informations de courant de marée sur une image affichée sur un écran d'affichage (17), comprenant :
un capteur d'image (10), fixé sur le corps mobile (11), configuré pour capturer l'image et délivrer des données d'image ;
un terminal d'informations de capteur d'image (12) configuré pour recevoir et stocker des informations de capteur d'image comportant une position et une orientation azimutale du capteur d'image (10) fixé au corps mobile (11) sur une surface de l'eau (W) ;
le terminal d'informations d'image est en outre configuré pour délivrer des données d'image pour les afficher sur l'écran d'affichage ;
un terminal d'informations de carte (13) configuré pour recevoir et stocker des informations de carte indiquant une carte (200) de la région (201) comportant le corps mobile (11) ;
un terminal d'informations de courant de marée (14) configuré pour recevoir et stocker des informations de courant de marée afférentes à un ou plusieurs emplacements dans la carte (200) ; et
une unité de sélection de courant de marée (151) configurée pour :
déterminer une sous-région (203) dans la région (201) de la carte (200) sur la base des informations de capteur d'image ; et
sélectionner un ou plusieurs courants de marée (204, 205) situés dans la sous-région (203) ;
une unité de calcul de position (152) configurée pour :
calculer une position d'affichage de chaque courant de marée sélectionné sur l'écran d'affichage (17) sur la base des informations de courant de marée et des informations de capteur d'image ; et
une unité de superposition de courant de marée (153) configurée pour :
générer un symbole pour chaque courant de marée sélectionné correspondant à chaque position d'affichage, dans lequel le symbole est configuré sous la forme d'un marqueur indiquant la position d'affichage du courant de marée correspondant sur l'écran d'affichage (17) ; et
superposer chaque symbole à chaque position d'affichage sur l'image affichée sur l'écran d'affichage en fonction des données d'image.

12. Appareil de navigation à RA selon la revendication 11, comprenant en outre :
l'écran d'affichage configuré pour afficher l'image, sur la base des données d'image et afficher les symboles superposés sur l'image.

13. Procédé de superposition d'informations de courant de marée sur une image affichée sur un écran d'affichage (17), comprenant :
la réception et le stockage de données d'image sur la base de l'image capturée par un capteur d'image (10) ;
la réception et le stockage d'informations de capteur d'image comportant une position et une orientation azimutale du capteur d'image (10) fixé à un corps mobile (11) sur une surface de l'eau (W) ;
la réception et le stockage d'informations de carte indiquant une carte (200) de la région (201) comportant le corps mobile (11) ;
la réception et le stockage d'informations de courant de marée afférentes à un ou plusieurs emplacements dans la carte (200) ;
la détermination d'une sous-région (203) dans la région (201) de la carte (200) sur la base des informations de capteur d'image ;
la sélection d'un ou plusieurs courants de marée (204, 205) situés dans la sous-région (203), sur la base des informations de courant de marée ;
le calcul d'une position d'affichage de chaque courant de marée sélectionné sur l'écran d'affichage (17) sur la base des informations de courant de marée et des informations de capteur d'image ;
la génération d'un symbole pour chaque courant de marée sélectionné correspondant à chaque position d'affichage, dans lequel le symbole est configuré sous la forme d'un marqueur indiquant la position d'affichage du courant de marée correspondant sur l'écran d'affichage (17) ; et
la superposition de chaque symbole à chaque position d'affichage sur l'image affichée sur l'écran d'affichage sur la base des données d'image.
